# EUROPEAN PATENT SPECIFICATION

(11) **EP 3 134 305 B1**
(45) Date of publication and mention of the grant of the patent: **27.09.2017**
(21) Application number: 15723752.0
(22) Date of filing: 13.04.2015
(51) Int. Cl.: B60W 50/00, B60W 50/14, B60W 10/06, B60W 10/08, B60W 30/182, B60W 20/12

(54) **MOVEMENT ASSISTANCE APPARATUS, MOVEMENT ASSISTANCE METHOD, AND DRIVING ASSISTANCE SYSTEM**
BEWEGUNGSASSISTENZVORRICHTUNG, BEWEGUNGSASSISTENZVERFAHREN UND FAHRASSISTENZSYSTEM
APPAREIL D'ASSISTANCE AU MOUVEMENT, PROCÉDÉ D'ASSISTANCE AU MOUVEMENT ET SYSTÈME D'ASSISTANCE À LA CONDUITE

(30) Priority: 25.04.2014 JP 2014091590
(43) Date of publication of application: 01.03.2017
(73) Proprietor: TOYOTA JIDOSHA KABUSHIKI KAISHA, Toyota-shi, Aichi-ken 471-8571 (JP)
(72) Inventor: MORISAKI, Keisuke, Toyota-shi, Aichi-ken 471-8571 (JP)
(74) Representative: TBK
(86) International application number: PCT/IB2015/000470
(87) International publication number: WO 2015/162474

(56) References cited:
- EP-A1- 2 071 285
- US-A1- 2011 276 209

## Description

### BACKGROUND OF THE INVENTION

### 1. Field of the Invention

The invention relates to a movement assistance apparatus, movement assistance method and driving assistance system that manage application of a plurality of drive modes to a vehicle.

### 2. Description of Related Art

As the above-described vehicle having a plurality of drive modes, there is known a hybrid vehicle that uses an internal combustion engine and a motor as driving sources. The hybrid vehicle has a first mode (EV mode), a second mode (HV mode), and the like, as the plurality of drive modes. In the first mode (EV mode), the amount of charge of a battery is not kept by giving a higher priority to EV traveling. In the EV traveling, the hybrid vehicle travels while stopping the internal combustion engine and using only the motor. In the second mode (HV mode), the amount of charge of the battery is kept by giving a higher priority to HV traveling. In the HV traveling, the hybrid vehicle travels while using both the internal combustion engine and the motor. A movement assistance apparatus including a navigation system, and the like, and mounted on the hybrid vehicle carries out assistance on the basis of map information, such as map information and road traffic information. The assistance includes, for example, calculating a travel route from a current position to a destination and selecting a drive mode that is applied to each of sections that are sections in the travel route. For example, Japanese Patent Application Publication No. 2009-12605 (JP 2009-12605 A) describes an example of a vehicle control system having such a movement assistance function.

Incidentally, the vehicle control system described in JP 2009-12605 A sets a drive mode in each section in a travel route by considering an energy balance in the overall travel route so that the remaining amount of charge of a battery that is a secondary battery becomes zero at a destination. However, because a drive mode is set section by section, the remaining amount of charge of the battery can remain at a destination of a travel route. Therefore, there is room for improvement in terms of fuel economy.

Such an inconvenience is mostly common to apparatuses or methods that carry out assignment of drive modes for a vehicle including a plurality of drive modes having different energy balances. US 2011/276209 A teaches to modify the travel schedule in order to increase the amount of consumed electricity and reach zero battery charge.

### SUMMARY OF THE INVENTION

The invention provides a movement assistance apparatus and a movement assistance method that are able to further improve fuel economy at a destination of a travel route, and a driving assistance system including such a movement assistance function.

A first aspect of the invention provides a movement assistance apparatus. The movement assistance apparatus assists movement of a vehicle including an internal combustion engine and a motor as driving sources. The movement assistance apparatus includes: a planning unit configured to plan any one of a first mode or a second mode as a drive mode for each section into which a travel route from a current position to a destination is sectioned, an amount of charge of a battery not being kept in the first mode, the amount of charge of the battery being kept in the second mode; and a control unit configured to control the drive mode of each section of the travel route on the basis of the drive mode planned by the planning unit for that section, the control unit being configured to, when a current remaining amount of charge of the battery is smaller than a remaining amount of charge of the battery required to travel in the first mode over the entire section including the current position, control the drive mode of the section including the current position to the first mode until the remaining amount of charge of the battery becomes zero irrespective of the drive mode planned by the planning unit for the section including the current section.

A second aspect of the invention provides a movement assistance method. The movement assistance method assists movement of a vehicle including an internal combustion engine and a motor as driving sources. The movement assistance method includes: planning, by a planning unit, any one of a first mode or a second mode as a drive mode for each section into which a travel route from a current position to a destination is sectioned, an amount of charge of a battery not being kept in the first mode, the amount of charge of the battery being kept in the second mode; controlling, by a control unit, the drive mode of each section of the travel route on the basis of the drive mode planned by the planning unit for that section; and, when a current remaining amount of charge of the battery is smaller than a remaining amount of charge of the battery required to travel in the first mode over the entire section including the current position, controlling, by the control unit, the drive mode of the section including the current position to the first mode until the remaining amount of charge of the battery becomes zero irrespective of the drive mode planned by the planning unit for the section including the current section.

According to the above aspect, in controlling the drive mode while the vehicle is traveling, when the current remaining amount of charge of the battery is smaller than the remaining amount of charge of the battery required to travel in the first mode over the entire section including the current position, the drive mode in the section including the current position is controlled to the first mode until the remaining amount of charge of the battery becomes zero irrespective of the drive mode planned by the planning unit for the section including the current position. That is, when the remaining amount of charge of the battery is not larger than or equal to the remaining amount of charge of the battery required to travel in the first mode over the entire section including the current position, the vehicle does not travel in the second mode while the remaining amount of charge of the battery still remains. Therefore, the remaining amount of charge of the battery may become zero at the destination of the travel route, so further improvement in fuel economy is achieved.

In the above aspect, the movement assistance apparatus further includes a display unit configured to indicate the drive mode planned for a section in the travel route from the current position to a first position a predetermined distance ahead of the current position, the display unit being configured to, when the current remaining amount of charge of the battery is smaller than the remaining amount of charge of the battery required to travel in the first mode over the entire section including the current position, indicate the first mode as a drive mode of a subsection up to a second position closer to the current position than the first position.

The movement assistance method further includes indicating, by the display unit, the drive mode planned for a section in the travel route from the current position to a first position a predetermined distance ahead of the current positon, and, when the current remaining amount of charge of the battery is smaller than the remaining amount of charge of the battery required to travel in the first mode over the entire section including the current position, indicating, by the display unit, the first mode as a drive mode of a subsection up to a second position closer to the current position than the first position.

According to the above aspect, when the current remaining amount of charge of the battery is smaller than the remaining amount of charge of the battery required to travel in the first mode over the entire section including the current position, the first mode is indicated as the drive mode for the subsection up to the second position closer to the current position than the first position. Thus, the drive mode is indicated in accordance with the mode of control on the drive mode, so it is possible to provide further reliable information appropriate for an actual situation to a driver.

In the above aspect, the second position may be set in accordance with the current remaining amount of charge of the battery. In the movement assistance method, the second position may be set in accordance with the current remaining amount of charge of the battery.

According to the above aspect, because the second position is set in accordance with the current remaining amount of charge of the battery, it is possible to accurately indicate a distance that the vehicle is actually able to travel in the first mode in the section including the current position.

A third aspect of the invention provides a driving assistance system. The driving assistance system includes: the movement assistance apparatus according to the above aspect, the movement assistance apparatus being configured to plan one drive mode for each section into which a travel route from a current position of a vehicle to a destination is sectioned and control a drive mode of each section in accordance with the one drive mode in order to assist driving of the vehicle on the basis of the one drive mode, the vehicle including an internal combustion engine and a motor as driving sources, the one drive mode being selected from among a plurality of different drive modes.

According to the above aspects, it is possible to provide driving assistance that is able to further improve fuel economy at a destination of a travel route.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram that shows the schematic configuration of a movement assistance apparatus according to an embodiment of the invention;
FIG. 2 is a flowchart that shows the procedure of the process of planning a drive mode, which is executed by the movement assistance apparatus according to the embodiment;
FIG. 3 is a flowchart that shows the control procedure of control on a drive mode, which is executed by the movement assistance apparatus according to the embodiment;
FIG. 4A is a view that shows an example of a drive mode of each section in a travel route, which is planned by the movement assistance apparatus according to the embodiment;
FIG. 4B and FIG. 4C are views that respectively show examples of control on a drive mode of each section in the travel route, which is executed by the movement assistance apparatus according to the embodiment for the example of the plan shown in FIG. 4A;
FIG. 5A, FIG. 5B and FIG. 5C are views that respectively show examples of a change of drive modes that are indicated by the movement assistance apparatus according to the embodiment;
FIG. 6A is a view that shows an example of a drive mode of each section in a travel route, which is planned by the movement assistance apparatus according to the embodiment;
FIG. 6B and FIG. 6C are views that respectively show examples of control on a drive mode of each section in the travel route, which is executed by the movement assistance apparatus according to the embodiment for the example of the plan shown in FIG. 6A; and
FIG. 7A, FIG. 7B and FIG. 7C are views that respectively show examples of a change of drive modes that are indicated by the movement assistance apparatus according to the embodiment.

### DETAILED DESCRIPTION OF EMBODIMENTS

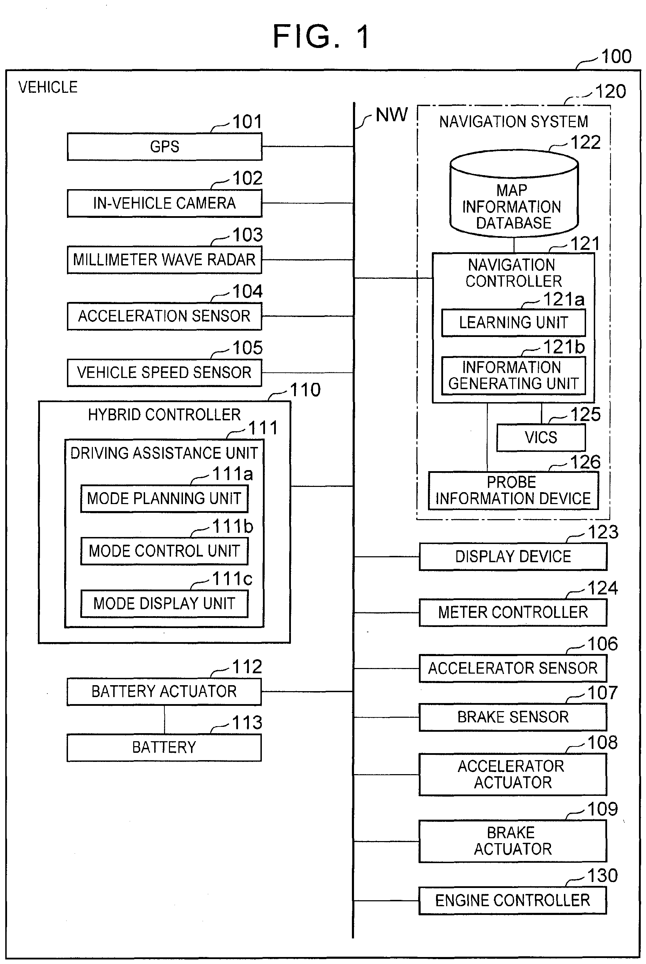

Hereinafter, an embodiment of a movement assistance apparatus, movement assistance method and driving assistance system will be described with reference to FIG. 1 to FIG 7C. The movement assistance apparatus, movement assistance method and driving assistance system according to the present embodiment are applied to a hybrid vehicle that uses an electric motor and an internal combustion engine as driving sources. The electric motor uses a battery formed of a secondary battery as a power source. The internal combustion engine uses gasoline or another fuel as a power source.

As shown in FIG. 1, a vehicle 100 includes, for example, a global positioning system (GPS) 101, an in-vehicle camera 102, a millimeter wave radar 103, an acceleration sensor 104, a vehicle speed sensor 105, and the like, as devices that detect the traveling states of the vehicle 100. These GPS 101, in-vehicle camera 102, millimeter wave radar 103, acceleration sensor 104 and vehicle speed sensor 105 are connected to a hybrid controller 110, a navigation controller 121 of a navigation system 120 and an engine controller 130 via an in-vehicle network NW, such as a controller area network (CAN). Each of the hybrid controller 110, the navigation controller 121 and the engine controller 130 is a so-called electronic control unit (ECU), and includes a small computer having an arithmetic unit and a memory. Each of the hybrid controller 110, the navigation controller 121 and the engine controller 130 is able to execute various controls by computing programs or parameters stored in the memory with the use of the arithmetic unit.

The GPS 101 receives signals from GPS satellites, and detects the position of the vehicle 100 on the basis of the signals received from the GPS satellites in form of, for example, latitude/longitude. The GPS 101 outputs positional information that is information indicating the detected position (latitude/longitude) of the vehicle 100. The in-vehicle camera 102 captures the image of a surrounding environment of the vehicle 100, and outputs the captured image data. The millimeter wave radar 103 detects an object around the vehicle 100 with the use of millimeter waveband radio waves, and outputs a signal corresponding to the detected result.

The acceleration sensor 104 detects the acceleration of the vehicle 100, and outputs a signal corresponding to the detected acceleration. The vehicle speed sensor 105 detects the rotation speed of each wheel of the vehicle 100, and outputs a signal corresponding to the detected rotation speed.

An accelerator sensor 106 detects the driver's operation amount of an accelerator pedal, and outputs a signal corresponding to the detected operation amount of the accelerator pedal. A brake sensor 107 detects the driver's operation amount of a brake pedal, and outputs a signal corresponding to the detected operation amount of the brake pedal.

The vehicle 100 includes an accelerator actuator 108 and a brake actuator 109. The accelerator actuator 108 controls the driving state of the internal combustion engine. The brake actuator 109 controls a brake. The accelerator actuator 108 and the brake actuator 109 are electrically connected to the in-vehicle network NW. The accelerator actuator 108 controls the internal combustion engine on the basis of a controlled variable of the internal combustion engine. The controlled variable of the internal combustion engine is calculated by the engine controller 130 in accordance with the detected value of the accelerator sensor 106. The brake actuator 109 controls the brake on the basis of a controlled variable of the brake. The controlled variable of the brake is calculated by the engine controller 130 in accordance with the detected value of the brake sensor 107.

The vehicle 100 includes a battery 113 and a battery actuator 112. The battery 113 is a power source of the electric motor that serves as the driving source. The battery actuator 112 controls the charge or discharge of the battery 113. The battery actuator 112 is electrically connected to the in-vehicle network NW. The battery actuator 112 manages the charge or discharge, and the like, of the battery 113. The battery actuator 112 drives the electric motor by controlling the discharge of the battery 113 or charges the battery 113 through regeneration of the electric motor.

The vehicle 100 includes the hybrid controller 110 that controls the driving state of the internal combustion engine and the driving state of the electric motor. The hybrid controller 110 is electrically connected to the battery actuator 112, the accelerator actuator 108 and the brake actuator 109 via the in-vehicle network NW.

The hybrid controller 110 determines the distribution (output ratio) of driving force between the internal combustion engine and the electric motor on the basis of the detected results of the acceleration sensor 104, the vehicle speed sensor 105 and the accelerator sensor 106. Particularly, the hybrid controller 110 adjusts the remaining amount of charge of the battery 113 by changing the distribution (output ratio) of driving force between the internal combustion engine and the electric motor. The remaining amount of charge of the battery 113 is the energy level of the battery 113. The hybrid controller 110 carries out EV traveling or HV traveling. In the EV traveling, the vehicle 100 stops the internal combustion engine, and uses the electric motor as the driving source. In the HV traveling, the vehicle 100 uses both the internal combustion engine and the electric motor as the driving sources.

The hybrid controller 110 selects one of a charge depleting (CD) mode and a charge sustaining (CS) mode as needed. The CD mode is a mode in which the amount of charge of the battery 113 is consumed. The CS mode is a mode in which the amount of charge of the battery 113 is kept.

The CD mode is a mode in which electric power charged in the battery 113 is actively consumed without keeping the amount of charge of the battery 113, and the EV traveling is given a higher priority. Hereinafter, description will be made on the assumption that the CD mode is an EV mode. Even in the EV mode, when the accelerator pedal is depressed by a large amount and large driving power is required, the internal combustion engine is driven.

The CS mode is a mode in which the amount of charge of the battery 113 is kept within a predetermined range with respect to a reference value, and is a mode in which the electric motor is regeneratively operated by driving the internal combustion engine where necessary in order to keep the amount of charge, and the HV traveling is given a higher priority. Hereinafter, description will be made on the assumption that the CS mode is an HV mode. Even in the HV mode, when the amount of charge of the battery 113 is larger than the reference value, the internal combustion engine stops. The reference value of the HV mode is appropriately set to a value of the amount of charge at the time when the drive mode is changed from the EV mode to the HV mode or a value of the amount of charge required to keep the performance of the battery 113.

Under the selected EV mode or HV mode, the hybrid controller 110 generates a command to control the battery actuator 112 in association with the discharge, or the like, of the battery 113 or information about the controlled variable of the internal combustion engine on the basis of the distribution of driving force. The controlled variable of the internal combustion engine is calculated by the engine controller 130. The hybrid controller 110 determines the distribution of braking force between the brake and the electric motor on the basis of the detected results of the acceleration sensor 104, the vehicle speed sensor 105 and the brake sensor 107. The hybrid controller 110 generates a command to control the battery actuator 112 in association with the charge, or the like, of the battery 113 or information about the controlled variable of the brake on the basis of the distribution of braking force. The controlled variable of the brake is calculated by the engine controller 130. That is, the hybrid controller 110 controls the charge or discharge of the battery 113 by outputting the generated control command to the battery actuator 112. Thus, the electric motor that uses the battery 113 as the power source (electric power source) is driven by discharging the battery 113, or the battery 113 is charged by regeneration of the electric motor. The hybrid controller 110 is able to monitor the execution status of hybrid control or the charging rate of the battery 113.

The hybrid controller 110 executes control for switching between the EV mode and the HV mode in accordance with a selected result of the driver of the vehicle 100. The hybrid controller 110 has the function of automatically switching between the EV mode and the HV mode. The hybrid controller 110 executes control for switching between the EV mode and the HV mode on the basis of, for example, information about a traveling load required of the vehicle 100 to travel in each section of the travel route. The information about the required traveling load is input from the navigation controller 121. The traveling load is the amount of load per unit distance in the intended section, and is an average amount of load required of the vehicle 100 to travel in that section. On the other hand, an accumulated value of the traveling load required of the vehicle 100 to complete traveling in the intended section is defined as a consumption energy.

The vehicle 100 includes a map information database 122 in which map data is entered. The map data is data about geography, such as roads. The map data includes information about a position, such as latitude/longitude, together with display-type data, or the like, by which geography can be displayed. The display-type data includes display information, such as river, lake and sea. The map data may include information, such as an intersection name, a road name, a direction name, a direction guide and facility information.

The map information database 122 contains node data and link data. The node data is information about nodes each indicating a position on a road. The link data is information about links, each of which is a section between two nodes. The nodes are set to the positions of specific traffic elements, such as intersections, traffic signals and curves, points of change in the number of lanes, and the like, on roads. Each piece of the node data includes information about the position of the corresponding node, road information at that position, and the like. Each link is set between two nodes as a section that is sectioned by those two nodes. Each piece of the link data includes information about two nodes, road information of the corresponding section of the link, and the like. The traveling load may be acquired or calculated from the traveling load information included in the link data. The road information of the section of each link includes information, such as a start position, an end position, a distance, a route and a gradient. Each piece of the link data further includes various pieces of data, such as cost data, road data, mark data, intersection data and facility data. The cost data includes the traveling load of the section of the link. The road data includes a road type. The mark data indicates a specific position. The intersection data indicates information about an intersection. The facility data indicates information about a facility.

More specifically, each piece of the node data may be, for example, formed of node ID, the coordinates of a node, link IDs of all links connected to the node, node type, and the like. The node ID is the identification number of the node. The node type indicates the type of an intersection, a merging point, or the like. Each piece of the node data may further include, for example, data indicating the characteristic of the corresponding node, such as image ID. The image ID is the identification number of an image indicating the node.

The link data is, for example, formed of link ID, link length, and node IDs of nodes that are connected to a start point and an end point. The link ID is the identification number of the link. The link data includes not only data indicating a road type, such as an expressway, a toll road, an ordinary road, a city/urban road, a mountain area road, a tunnel, a bridge and a grade separated crossing, but also required information within data, and the like, indicating a road width, a link travel time, a legal limit and a gradient of a road. In addition, the link data may include data indicating the mean value, maximum value, minimum value, and the like, of a travel time, moving speed, fuel consumption amount, electric power consumption amount, and the like, as traveling load information that is an output required of the vehicle 100 in each link. The electric power consumption amount is the amount of electric power that is consumed by the electric motor when the vehicle 100 travels in the EV mode. The traveling load of each link (section) is acquired or calculated on the basis of such traveling load information. The traveling load is a mean value in each link (section), and is expressed in [kW], or the like. A consumption energy that is an accumulated value of the traveling load required of the vehicle 100 to complete traveling in each link (section) may be calculated from the traveling load and the link length (section length).

The vehicle 100 includes the navigation system 120 that performs route guidance, or the like. The navigation controller 121 of the navigation system 120 acquires the current point (latitude/longitude) of the vehicle 100 from the GPS 101. When a destination point is set by the driver, the navigation controller 121 identifies the destination point (latitude/longitude). The navigation controller 121 searches the map information database 122 for a travel route from the current point of the vehicle 100 to the destination point by the use of, for example, Dijkstra method.

The navigation controller 121 includes a learning unit 121a. The learning unit 121a learns the travel time, the moving speed, the fuel consumption amount and the electric power consumption amount in the travelled travel route, obtained from the vehicle 100. The learning unit 121a constitutes the movement assistance apparatus, and is configured to exercise the function thereof by, for example, executing a program in the navigation controller 121. The learning unit 121a acquires the travel time, moving speed, fuel consumption amount and electric power consumption amount of each section of the travel route from various sensors, and stores these pieces of information in association with a corresponding one of the sections in the map information database 122. The learning unit 121a accumulates these pieces of information in association with the corresponding section in the map information database 122 each time the vehicle 100 travels in the same section, thus increasing the accuracy of information about each section.

The navigation controller 121 includes an information generating unit 121b. The information generating unit 121b generates information about a traveling load, and the like, which is referenced at the time of planning a drive mode. The information generating unit 121b constitutes the movement assistance apparatus, and is configured to exercise the function thereof by, for example, executing a program in the navigation controller 121. Particularly, the information generating unit 121b has the function of calculating the traveling load of each section of the travel route on the basis of gradient information or traffic congestion information of the corresponding section. The information generating unit 121b calculates the traveling load during ordinary traveling on the basis of vehicle information, such as the moving speed, travel time, fuel consumption amount and the electric power consumption amount of the vehicle 100, and traveling environment information. The learning unit 121a stores the traveling load in association with the corresponding section in the map information database 122.

A vehicle information communication system (VICS (trademark)) 125 is connected to the navigation controller 121. The VICS 125 acquires information, such as traffic congestion information, a required time, accident/disabled car/construction information and speed limit/lane closure. A probe information device 126 is connected to the navigation controller 121. The probe information device 126 acquires probe traffic information. The probe traffic information is road traffic information generated by using information about actually travelled positions, vehicle speeds, and the like, obtained from vehicles with which a data center or information is shared. Therefore, the information generating unit 121b is able to acquire congested sections among the sections of the travel route by acquiring traffic congestion information from one or both of the VICS 125 and the probe information device 126.

The navigation controller 121 outputs the information indicating the found travel route or the calculated traveling load, travel time, moving speed, fuel consumption amount and electric power consumption amount to the hybrid controller 110 via the in-vehicle network NW, and outputs the information to a display device 123 via the in-vehicle network NW. The display device 123 is formed of a liquid crystal display, or the like, provided in a vehicle cabin.

The vehicle 100 includes a meter controller 124. The meter controller 124 controls a display status that is displayed on a meter of an instrument panel provided at a dashboard. The meter controller 124 acquires, for example, data indicating the charge/discharge status of the battery 113, or the like, from the hybrid controller 110, and visually shows, for example, energy flow in the vehicle 100 on the basis of the acquired data. The energy flow is the flow of energy in the vehicle 100, which occurs as a result of the charge or discharge of the battery 113, the driving force/regeneration of the electric motor, or the like. The energy flow may include the flow of energy in the vehicle 100, which occurs as a result of the driving force, or the like, of the internal combustion engine.

When a travel route is input, the hybrid controller 110 assigns the drive mode to each section of the travel route. The hybrid controller 110 includes a driving assistance unit 111. The driving assistance unit 111 assists assignment of the drive mode according to the travel route. The driving assistance unit 111 acquires information about the travel route to the destination point from the navigation controller 121. The destination is set by the driver. The driving assistance unit 111 includes a mode planning unit 111a. The mode planning unit 111a sets up a plan, or the like, of the drive modes that may be respectively assigned to the sections of the acquired travel route. The mode planning unit 111a constitutes the movement assistance apparatus, and is configured to exercise the function thereof by, for example, executing a program in the hybrid controller 110. The mode planning unit 111a has the function of planning the drive mode of each section of the travel route in accordance with the traveling load of that section in consideration of an energy balance in the overall travel route.

Generally, the efficiency tends to be higher as traveling using the electric motor is applied to a section having a small traveling load, and the efficiency tends to be higher as traveling using the internal combustion engine is applied to a section having a large traveling load. Therefore, the hybrid controller 110 is configured to assign the EV mode to a section having a small traveling load and to assign the HV mode to a section having a large traveling load.

The mode planning unit 111a assigns the EV mode to a plurality of target sections in ascending order of traveling load in each section. The mode planning unit 111a accumulates a consumption energy in the sections to which the EV mode is assigned, and subtracts the accumulated consumption energy from the remaining energy level of the battery 113. The mode planning unit 111a continues to assign the EV mode to sections so that the accumulated consumption energy does not exceed the remaining energy level of the battery 113. Thus, the mode planning unit 111a assigns the EV mode to sections having a relatively low traveling load among the sections of the travel route. The mode planning unit 111a assigns the HV mode to sections to which the EV mode is not assigned.

The driving assistance unit 111 includes a mode control unit 111b. The mode control unit 111b causes the vehicle 100 to travel in the drive mode planned by the mode planning unit 111a. The mode control unit 111b constitutes the movement assistance apparatus, and is configured to exercise the function thereof by, for example, executing a program in the hybrid controller 110. The mode control unit 111b identifies a currently traveling section, that is, a current section, by appropriately acquiring currently traveling positional information, and switches into the EV mode or HV mode assigned to the identified section.

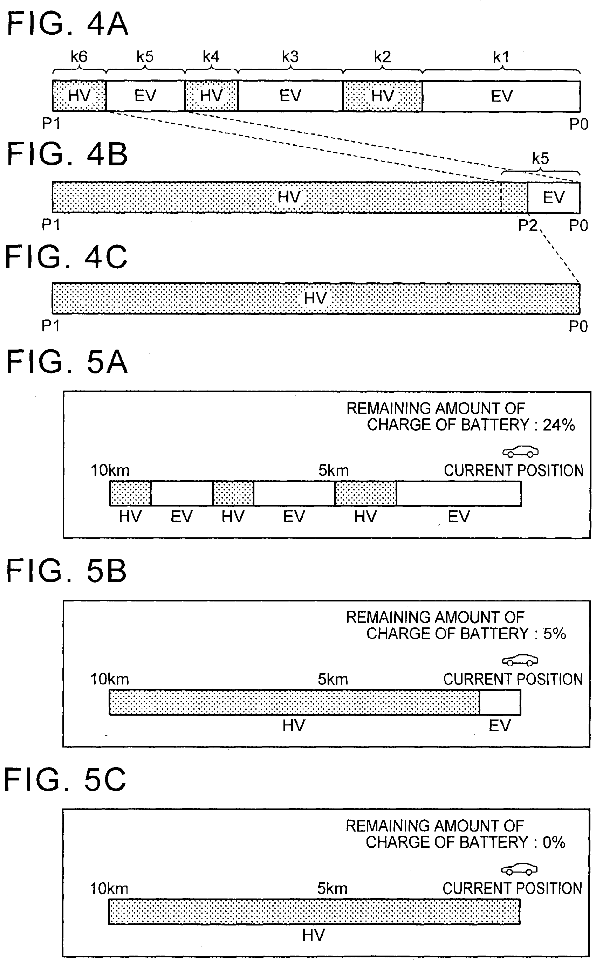

The driving assistance unit 111 includes a mode display unit 111c. The mode display unit 111c is caused to indicate the drive mode planned by the mode planning unit 111a or the drive mode that is controlled by the mode control unit 111b. The mode display unit 111c constitutes the movement assistance apparatus, and is configured to exercise the function thereof by, for example, executing a program in the hybrid controller 110. The mode display unit 111c outputs, to the display device 123 and the meter controller 124, the drive mode of each section of the travel route as described above, and causes the display device 123 and the meter to indicate the drive mode of the traveling section. That is, as shown in FIG. 5A to FIG. 5C, the drive mode of each section of the travel route from the current position to, for example, a position 10 km ahead is indicated on the display device 123 and the meter.

Incidentally, the mode planning unit 111a plans the drive mode of each section of the travel route in consideration of an energy balance in the overall travel route so that the remaining amount of charge of the battery 113 becomes zero at the destination. However, because the drive mode is planned section by section, the remaining amount of charge of the battery 113 can remain at the destination of the travel route. Therefore, there is room for improvement in terms of fuel economy. Therefore, when the current remaining amount of charge of the battery 113 is smaller than the remaining amount of charge of the battery 113 required to travel in the EV mode over the entire section including the current position (current section), the mode control unit 111b controls the drive mode of the current section to the EV mode until the remaining amount of charge of the battery 113 becomes zero irrespective of the drive mode planned by the mode planning unit 111a.

In the case where the mode display unit 111c indicates the drive mode of each section of the travel route, if the mode display unit 111c indicates the HV mode as the drive mode although the vehicle 100 is able to travel in the EV mode at the time when the remaining amount of charge of the battery 113 allows the vehicle 100 to travel a distance shorter than one section, there is a concern that the drive mode differs from an actual operation and a feeling of strangeness is experienced by the driver. Therefore, when the current remaining amount of charge of the battery 113 is smaller than the remaining amount of charge of the battery 113 required to travel in the EV mode over the entire current section, the mode display unit 111c indicates the EV mode as a drive mode of a subsection up to a second position closer to the current position than a first position a predetermined distance ahead of the current position in the travel route.

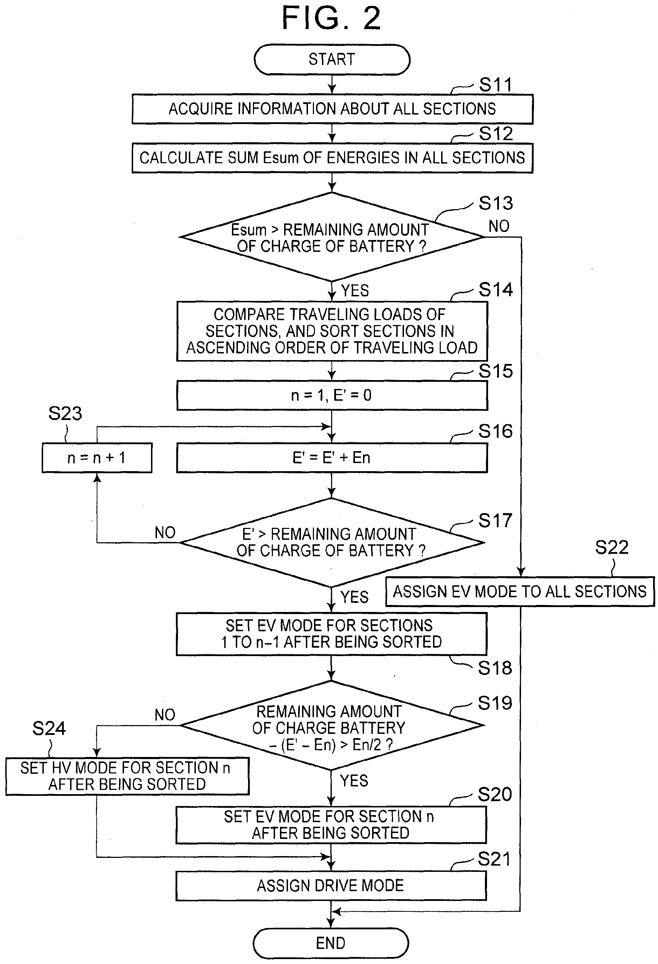

Next, the process of planning a drive mode, which is executed by the mode planning unit 111a of the driving assistance unit 111, will be described together with its operation with reference to FIG. 2. The driving assistance unit 111 plans the drive mode for each section of a travel route each time the travel route is transmitted from the navigation controller 121.

As shown in FIG. 2, when a destination point is set by the navigation controller 121, the driving assistance unit 111 acquires route information about all the sections in the travel route (step S11). Subsequently, the driving assistance unit 111 calculates the sum Esum of consumption energies in all the sections of the travel route (step S12), and determines whether the sum Esum of the consumption energies in all the sections of the travel route is larger than the remaining amount of charge of the battery 113 (step S 13). That is, the mode planning unit 111a determines whether the vehicle 100 is allowed to travel in the EV mode over the entire sections of the travel route. When it is determined that the sum Esum of the consumption energies in all the sections of the travel route is not larger than the remaining amount of charge of the battery 113 (NO in step S 13), the driving assistance unit 111 assigns the EV mode to all the sections of the travel route (step S22).

On the other hand, when it is determined that the sum Esum of the consumption energies in all the sections of the travel route is larger than the remaining amount of charge of the battery 113 (YES in step S13), the driving assistance unit 111 compares the traveling loads in the respective sections of the travel route, and sorts the sections in ascending order of traveling load (step S 14).

The driving assistance unit 111 sets the sections sorted in ascending order of traveling load as sections n = 1 to n , and sets n = 1 and consumption energy E' = 0 (step S 15). The driving assistance unit 111 calculates the sum of consumption energies to the section n (E' = E' + En) (step S16). A consumption energy calculated on the basis of the traveling load acquired from the map information database 122 is employed as the consumption energy of the currently traveling section.

Subsequently, the driving assistance unit 111 determines whether the sum E' of the consumption energies in the sections up to the section n is larger than the remaining amount of charge of the battery 113 (step S17). When the driving assistance unit 111 determines that the sum E' of the consumption energies in the sections up to the section n is smaller than or equal to the remaining amount of charge of the battery 113 (NO in step S17), the driving assistance unit 111 sets "n = n + 1" for adding one section (step S23).

When the driving assistance unit 111 determines that the sum E' of the consumption energies in the sections up to the section n is larger than the remaining amount of charge of the battery 113 (YES in step S 17), the driving assistance unit 111 sets the EV mode for the sections 1 to n-1 after being sorted (step S18). The driving assistance unit 111 determines whether the difference between the remaining amount of charge of the battery and the sum of the consumption energies up to the section n-1 (E'-En) is larger than a half of the consumption energy En in the section n after being sorted (step S 19). That is, the mode planning unit 111a determines whether a distance that the vehicle 100 is allowed to travel in the EV mode within the section n after being sorted is longer than or equal to more than half of the section n.

When the driving assistance unit 111 determines that the difference between the remaining amount of charge of the battery and the sum of the consumption energies up to the section n-1 (E'-En) is smaller than or equal to half of the consumption energy En in the section n after being sorted (NO in step S 19), the driving assistance unit 111 sets the HV mode for the section n after being sorted (step S24), and proceeds with the process to step S21. On the other hand, when the driving assistance unit 111 determines that the difference between the remaining amount of charge of the battery and the sum of the consumption energies up to the section n-1 (E'-En) is larger than half of the consumption energy En in the section n after being sorted (YES in step S 19), the driving assistance unit 111 sets the EV mode for the section n after being sorted (step S20). The driving assistance unit 111 assigns the drive mode to each section of the travel route (step S21), and ends the planning process. That is, the mode planning unit 111a sets the HV mode to sections that are not set to the EV mode.

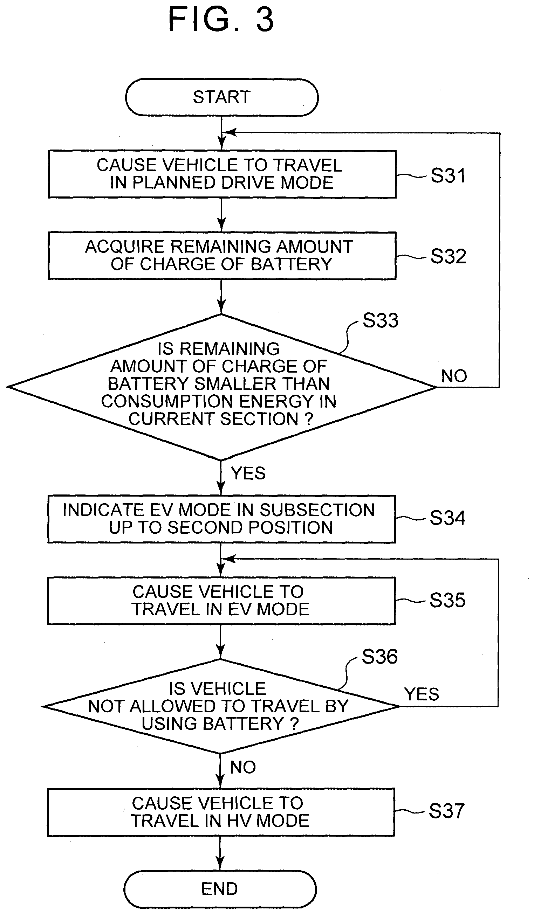

Next, the process of controlling the drive mode by the mode control unit 111b of the driving assistance unit 111 will be described together with its operation with reference to FIG. 3. The driving assistance unit 111 controls the drive mode of each section of a travel route on the basis of the drive mode planned by the mode planning unit 111a for the corresponding section of the travel route.

As shown in FIG. 3, when the vehicle 100 starts traveling, the driving assistance unit 111 controls the vehicle 100 so that the vehicle 100 travels in the drive mode planned by the mode planning unit 111a (step S31).

The driving assistance unit 111 acquires the remaining amount of charge of the battery 113 (step S32). The driving assistance unit 111 determines whether the remaining amount of charge of the battery 113 is smaller than the consumption energy in the current section (step S33). That is, the mode control unit 111b determines whether the remaining amount of charge of the battery 113 is smaller than the remaining amount of charge of the battery 113 required to travel in the EV mode in the current section. As a result, when the driving assistance unit 111 determines that the remaining amount of charge of the battery 113 is larger than or equal to the consumption energy in the current section (NO in step S33), the driving assistance unit 111 proceeds with the process to step S31, and controls the drive mode on the basis of the drive mode planned by the mode planning unit 111a for each section of the travel route.

On the other hand, when the driving assistance unit 111 determines that the remaining amount of charge of the battery 113 is smaller than the consumption energy in the current section (YES in step S33), the driving assistance unit 111 indicates the EV mode in a subsection up to the second position close to the current position on the display device 123 and the meter (step S34). That is, irrespective of the drive mode planned section by section by the mode planning unit 111a, the mode display unit 111c indicates the EV mode in the subsection up to the second position close to the current position, and indicates the HV mode in the subsection following the second position close to the current position.

The driving assistance unit 111 controls the vehicle 100 so that the vehicle 100 travels in the EV mode (step S35), and determines whether the vehicle 100 is not allowed to travel by using the battery 113 (step S36). That is, the mode control unit 111b determines whether the remaining amount of charge of the battery 113 becomes zero and the vehicle 100 is not allowed to travel in the EV mode. As a result, when the driving assistance unit 111 determines that the vehicle 100 is allowed to travel by using the battery 113 (YES in step S36), the driving assistance unit 111 proceeds with the process to step S36, and controls the drive mode to the EV mode.

When the driving assistance unit 111 determines that the vehicle 100 is not allowed to travel by using the battery 113 (NO in step S36), the vehicle 100 is not allowed to travel in the EV mode. Therefore, the driving assistance unit 111 causes the vehicle 100 to travel in the HV mode (step S37), and then ends the control process. That is, the mode control unit 111b controls the drive mode to the HV mode from the timing at which the remaining amount of charge of the battery 113 becomes zero.

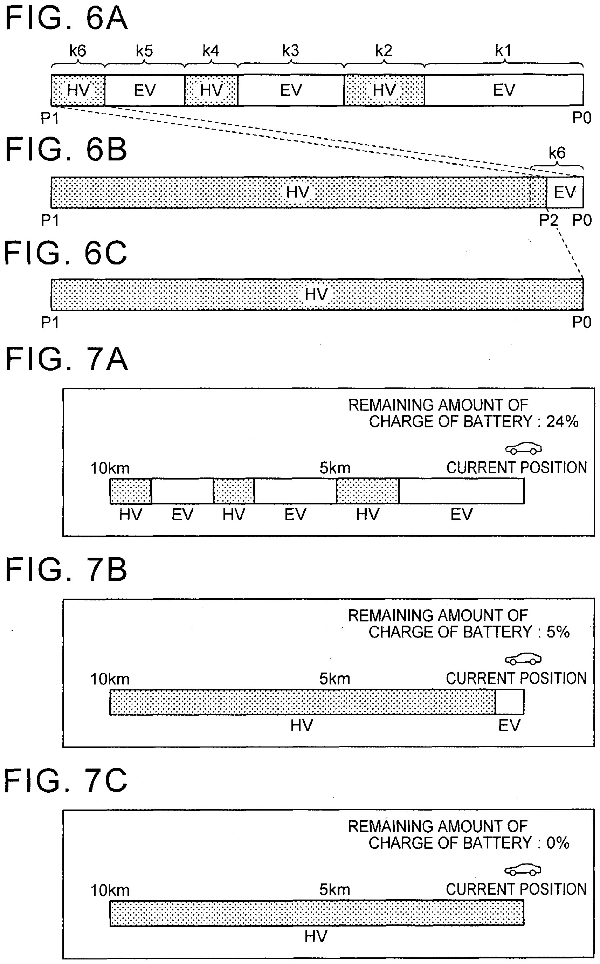

Hereinafter, specific plan and control on the drive mode will be described with reference to FIG. 4A to FIG. 7C. For example, as shown in FIG. 4A and FIG. 6A, there are a first section k1 to a sixth section k6 from a current position P0 to a first position P1 a predetermined distance ahead of the current position P0 within a travel route found by the navigation system 120 as a travel route before traveling from a current position to a destination. When the travel route is set, a drive mode is planned by the mode planning unit 111a of the driving assistance unit 111 for each of the first section k1 to the sixth section k6. Here, the EV mode is planned as the drive mode for the first section k1, the third section k3 and the fifth section k5, and the HV mode is planned as the drive mode for the second section k2, the fourth section k4 and the sixth section k6. FIG. 5A is a view that shows a state where the drive modes of the travel route shown in FIG. 4A are indicated on the display device 123 and the meter. FIG. 7A is a view that shows a state where the drive modes of the travel route shown in FIG. 6A are indicated on the display device 123 and the meter. A change at the "first position P1" shown in FIG. 4A to FIG. 4C corresponds to a change at "10 km" shown in FIG. 5A to FIG. 5C. A change at the "first position P1" shown in FIG. 6A to FIG. 6C corresponds to a change at "10 km" shown in FIG. 7A to FIG. 7C.

As shown in FIG. 4B, when the vehicle 100 travels along the travel route, enters the fifth section k5 for which the EV mode is planned as the drive mode and the remaining amount of charge of the battery 113 is smaller than the remaining amount of charge of the battery 113 required to travel in the EV mode over the entire fifth section k5, the mode control unit 111b controls the drive mode of the fifth section k5 including the current position to the EV mode until the remaining amount of charge of the battery 113 becomes zero irrespective of the drive mode planned by the mode planning unit 111a. With the control on the drive mode by the mode control unit 111b, the mode display unit 111c indicates the EV mode in a subsection from the current position P0 to a second position P2. The second position P2 is a position closer to the current position P0 than the first position P1, and is a position corresponding to a distance that is set in accordance with the remaining amount of charge of the battery 113 at the current position P0. That is, the second position P2 is not a position set in consideration of the traveling load within the section, but the second position P2 is set in accordance with the current remaining amount of charge of the battery 113. The second position P2 is set so as to be closer to the current position P0 as the remaining amount of charge of the battery decreases. FIG. 5B is a view that shows a state where the drive modes of the travel route shown in FIG. 4B are indicated on the display device 123 and the meter.

As shown in FIG. 4C, when the vehicle 100 further travels along the travel route and the remaining amount of charge of the battery 113 becomes zero, the mode display unit 111c indicates the HV mode as the drive mode from the current position P0 to the first position P1. FIG. 5C is a view that shows a state where the drive mode of the travel route shown in FIG. 4C is indicated on the display device 123 and the meter. At the timing at which the vehicle 100 is not allowed to travel in the EV mode, assistance of the driving assistance unit 111 to assign the drive mode in accordance with the travel route is completed.

As shown in FIG. 6B, when the vehicle 100 travels along the travel route, enters the sixth section k6 for which the HV mode is planned as the drive mode and then the remaining amount of charge of the battery 113 is smaller than the remaining amount of charge of the battery 113 required to travel in the EV mode over the entire sixth section k6, the mode control unit 111b controls the drive mode of the sixth section k6 including the current position to the EV mode until the remaining amount of charge of the battery 113 becomes zero irrespective of the drive mode planned by the mode planning unit 111a. With the control on the drive mode by the mode control unit 111b, the mode display unit 111c indicates the EV mode in a subsection from the current position P0 to the second position P2. FIG. 7B is a view that shows a state where the drive modes of the travel route shown in FIG. 6B are indicated on the display device 123 and the meter.

As shown in FIG. 6C, when the vehicle 100 further travels along the travel route and then the remaining amount of charge of the battery 113 becomes zero, the mode display unit 111c indicates the HV mode from the current position P0 to the first position P1. FIG. 7C is a view that shows a state where the drive mode of the travel route shown in FIG. 6C is indicated on the display device 123 and the meter.

That is, when the current remaining amount of charge of the battery 113 is smaller than the remaining amount of charge of the battery 113 required to travel in the EV mode over the entire current section (for example, the fifth section k5 or the sixth section k6), the drive mode of the current section is controlled to the EV mode until the remaining amount of charge of the battery 113 becomes zero. Therefore, the remaining amount of charge of the battery 113 may become zero at the destination of the travel route, so further improvement in fuel economy is achieved. Because the drive mode according to control on the drive mode is indicated, a difference between control on the drive mode and indication of the drive mode is suppressed, so it is possible to suppress a feeling of strangeness experienced by the driver.

As described above, according to the present embodiment, the following advantageous effects are obtained.
(1) In controlling the drive mode while the vehicle is traveling, when the current remaining amount of charge of the battery 113 is smaller than the remaining amount of charge of the battery 113 required to travel in the EV mode over the entire current section, the drive mode of the current section is controlled to the EV mode until the remaining amount of charge of the battery 113 becomes zero irrespective of the drive mode planned by the mode planning unit 111a. That is, when the remaining amount of charge of the battery 113 is not larger than or equal to the remaining amount of charge of the battery 113 required to travel in the EV mode over the entire current section, the vehicle 100 does not travel in the HV mode while the remaining amount of charge of the battery 113 still remains. Therefore, the remaining amount of charge of the battery 113 may become zero at the destination of the travel route, so further improvement in fuel economy is achieved.
(2) When the current remaining amount of charge of the battery 113 is smaller than the remaining amount of charge of the battery 113 required to travel in the EV mode over the entire current section, the EV mode is indicated as the drive mode in the subsection up to the second position P2 closer to the current position P0 than the first position P1. That is, in order to display the drive mode of the current section in accordance with control on the drive mode, not the same drive mode is set for the entire current section but the EV mode is indicated in the subsection up to the second position P2. Thus, the drive mode according to control on the drive mode is indicated, with the result that it is possible to provide further reliable information along with an actual situation to the driver.
(3) Because the second position P2 is set in accordance with the current remaining amount of charge of the battery 113, it is possible to accurately indicate, in the current section, a distance that the vehicle is actually able to travel in the EV mode. The above-described embodiment may be modified into the following alternative embodiments as needed.

As in the case of the above-described embodiment, in indicating a distance from the current position to the second position P2, it is desirable to variably indicate the length of the distance in accordance with the remaining amount of charge of the battery 113. However, as long as a feeling of strangeness is not experienced by the driver, a distance from the current position to the second position P2 may be indicated at a constant length irrespective of the remaining amount of charge of the battery 113. In this case, in light of the fact that the remaining amount of charge of the battery 113 becomes zero soon, the HV mode may be indicated at the timing of switching into control in the EV mode. Without such indication, as long as a feeling of strangeness is not experienced by the driver, such indication itself may be omitted.

In the above-described embodiment, only any one of the display device 123 or the meter that indicates the drive mode may be used, and may be changed to another display device as needed.
In the above-described embodiment, the in-vehicle network NW is illustrated as the CAN. However, the in-vehicle network NW is not limited to this configuration. The in-vehicle network NW may be formed of another network, such as Ethernet (trademark), FLexRay (trademark) and IEEE1394 (FireWire (trademark)), as long as the in-vehicle network NW communicably connects the ECUs, and the like, being connected. These networks, including the CAN, may be configured in combination. Thus, the flexibility of the configuration of the vehicle to which the movement assistance apparatus is employed is improved.

In the above-described embodiment, the GPS 101 is connected to the navigation controller 121 via the in-vehicle network NW; instead, the GPS 101 may be directly connected to the navigation controller 121.
In the above-described embodiment, the case where the navigation system 120 and the driving assistance unit 111 are separate components is illustrated. However, the configuration of the navigation system 120 and the driving assistance unit 111 is not limited to this configuration. The navigation system and the driving assistance unit may be provided in the same device. Thus, the flexibility of the configuration of the movement assistance apparatus is improved.

In the above-described embodiment, the case where the hybrid controller 110 and the driving assistance unit 111 are provided in the same device is illustrated. However, the configuration of the hybrid controller 110 and the driving assistance unit 111 is not limited to this configuration. The hybrid controller and the driving assistance unit may be provided in separate devices. Thus, the flexibility of the configuration of the movement assistance apparatus is improved.

In the above-described embodiment, the case where the devices, such as the navigation system 120 and the display device 123, are provided integrally with the vehicle 100 is illustrated. However, the configuration of the devices is not limited to this configuration. As long as the devices, such as the navigation system and the display device, are communicably connected to one another, a portable information processing device, such as a cellular phone and a smart phone, may be used as all or part of those functions. Thus, the flexibility of design of the movement assistance apparatus is increased.

In the above-described embodiment, the case where the driving assistance unit 111, the navigation system 120, the map information database 122, and the like, are mounted on the vehicle 100 is illustrated. However, the driving assistance unit 111, the navigation system 120, the map information database 122, and the like, are not limited to this configuration. Part of the functions of the driving assistance unit, the navigation system, the map information database, and the like, may be provided in an information processing device outside the vehicle or may be provided in a portable information processing device. The information processing device outside the vehicle includes an information processing center. The portable information processing device includes a cellular phone, a smart phone, and the like. In the case of the information processing device outside the vehicle, information just needs to be exchanged via a wireless communication line. In the case of the portable information processing device, the device may be connected via an in-vehicle network or may be connected via a close range communication or information may be exchanged via a wireless communication line. Thus, the flexibility of design of the movement assistance apparatus is increased.

In the above-described embodiment, the learning unit 121a is provided. The learning unit 121a learns the travel time, moving speed, fuel consumption amount and electric power consumption amount in the travelled travel route obtained from the vehicle 100. However, the learning function of learning in the travelled travel route may be omitted. Thus, it is possible to discard the process required for learning.

In the above-described embodiment, the case where assignment of the drive mode is carried out by the driving assistance unit 111 is illustrated. However, assignment of the drive mode is not limited to this configuration. Assignment of the drive mode may be carried out by the navigation controller, or the like. Thus, the flexibility of design of the movement assistance apparatus is increased.

In the above-described embodiment, mainly, the case where assignment of the drive mode is carried out at the time when the position of the vehicle 100 is the current point is illustrated. Instead, assignment of the drive mode may be carried out at any point within a route along which the vehicle is moving to a destination point. Even at any point, assignment of the drive mode to all the sections in the travel route may be appropriately carried out. Thus, the flexibility of design of the movement assistance apparatus is increased.

As in the case of the above-described embodiment, it is desirable to plan the drive mode for each section of the travel route in accordance with the traveling load of that section; however, a method of planning the drive mode is not limited to such a method. Other than the above, for example, the drive mode may be planned in accordance with a vehicle speed, a time, or the like, in each section.

## Claims

1. A movement assistance apparatus that assists movement of a vehicle including an internal combustion engine and a motor as driving sources, the movement assistance apparatus comprising:
a planning unit (111a) configured to plan any one of a first mode or a second mode as a drive mode for each section into which a travel route from a current position to a destination is sectioned, an amount of charge of a battery (113) not being kept in the first mode, the amount of charge of the battery (113) being kept in the second mode;
a control unit (111b) configured to control the drive mode of each section of the travel route on the basis of the drive mode planned by the planning unit (111a) for that section, the control unit (111b) being configured to, when a current remaining amount of charge of the battery (113) is smaller than a remaining amount of charge of the battery (113) required to travel in the first mode over the entire section including the current position, control the drive mode of the section including the current position to the first mode until the remaining amount of charge of the battery (113) becomes zero irrespective of the drive mode planned by the planning unit (111a) for the section including the current section; and
a display unit (111c) configured to indicate the drive mode planned for a section in the travel route from the current position to a first position a predetermined distance ahead of the current position, the display unit (111c) being configured to, when the current remaining amount of charge of the battery (113) is smaller than the remaining amount of charge of the battery (113) required to travel in the first mode over the entire section including the current position, indicate the first mode as a drive mode of a subsection up to a second position closer to the current position than the first position.

2. The movement assistance apparatus according to claim 1, wherein
the second position is set in accordance with the current remaining amount of charge of the battery (113).

3. The movement assistance apparatus according to claim 2, wherein
the second position is set so as to be closer to the current position as the remaining amount of charge of the battery (113) decreases.

4. The movement assistance apparatus according to claim 1, wherein
the section is planned by the planning unit (111a) so that the vehicle travels in the second mode.

5. A movement assistance method that assists movement of a vehicle including an internal combustion engine and a motor as driving sources, the movement assistance method comprising:
planning, by a planning unit (111a), any one of a first mode or a second mode as a drive mode for each section into which a travel route from a current position to a destination is sectioned, an amount of charge of a battery (113) not being kept in the first mode, the amount of charge of the batter (113)y being kept in the second mode;
controlling, by a control unit (111b), the drive mode of each section of the travel route on the basis of the drive mode planned by the planning unit (111a) for that section;
when a current remaining amount of charge of the battery (113) is smaller than a remaining amount of charge of the battery (113) required to travel in the first mode over the entire section including the current position, controlling, by the control unit (111b), the drive mode of the section including the current position to the first mode until the remaining amount of charge of the battery (113) becomes zero irrespective of the drive mode planned by the planning unit (111a) for the section including the current section;
indicating, by a display unit (111c), the drive mode planned for a section in the travel route from the current position to a first position a predetermined distance ahead of the current position; and
when the current remaining amount of charge of the battery (113) is smaller than the remaining amount of charge of the battery (113) required to travel in the first mode over the entire section including the current position, indicating, by the display unit (111c), the first mode as a drive mode of a subsection up to a second position closer to the current position than the first position.

6. The movement assistance method according to claim 5, wherein
the second position is set in accordance with the current remaining amount of charge of the battery (113).

7. The movement assistance method according to claim 6, wherein
the second position is set so as to be closer to the current position as the remaining amount of charge of the battery (113) decreases.

8. The movement assistance method according to claim 5, wherein
the section is planned by the planning unit (111a) so that the vehicle travels in the second mode.

9. A driving assistance system comprising:
the movement assistance apparatus according to any one of claims 1 to 4, the movement assistance apparatus being configured to plan one drive mode for each section into which a travel route from a current position of a vehicle to a destination is sectioned and control a drive mode of each section in accordance with the one drive mode in order to assist driving of the vehicle on the basis of the one drive mode, the vehicle including an internal combustion engine and a motor as driving sources, the one drive mode being selected from among a plurality of different drive modes.

## Patentansprüche

1. Bewegungsunterstützungsvorrichtung, die eine Bewegung eines Fahrzeugs einschließlich einer Brennkraftmaschine und einem Motor als Antriebsquellen unterstützt, wobei die Bewegungsunterstützungsvorrichtung umfasst
eine Planeinheit (111a), die dazu eingerichtet ist, um irgendeine aus einer ersten Betriebsart oder einer zweiten Betriebsart als eine Fahrbetriebsart für jeden Abschnitt zu planen, in den eine Fortbewegungsroute von einer gegenwärtigen Position zu einem Ziel unterteilt ist, wobei ein Ladungsausmaß einer Batterie (113) in der ersten Betriebsart nicht gehalten wird, und wobei das Ladungsausmaß der Batterie (113) in der zweiten Betriebsart gehalten wird,
eine Steuereinheit (111b), die dazu eingerichtet ist, um die Fahrbetriebsart jedes Abschnitts der Fortbewegungsroute basierend auf der durch die Planeinheit (111a) für diesen Abschnitt geplanten Fahrbetriebsart zu steuern, wobei die Steuereinheit (111b) dazu eingerichtet ist, um, wenn ein gegenwärtiges verbleibendes Ladungsausmaß der Batterie (113) geringer als ein verbleibendes Ladungsausmaß der Batterie (113) ist, das benötigt ist, um sich in der ersten Betriebsart über den gesamten Abschnitt mit der gegenwärtigen Position fortzubewegen, ungeachtet der durch die Planeinheit (111a) für den Abschnitt mit dem gegenwärtigen Abschnitt geplanten Fahrbetriebsart die Fahrbetriebsart des Abschnitts mit der gegenwärtigen Position zu der ersten Fahrbetriebsart zu steuern, bis das verbleibende Ladungsausmaß der Batterie (113) Null wird, und
eine Anzeigeeinheit (111c), die dazu eingerichtet ist, um die für einen Abschnitt in der Fortbewegungsroute von der gegenwärtigen Position zu einer ersten Position eine vorbestimmte Distanz vor der gegenwärtigen Position geplante Fahrbetriebsart anzuzeigen, wobei die Anzeigeeinheit (111c) dazu eingerichtet ist, um, wenn das gegenwärtige verbleibende Ladungsausmaß der Batterie (113) geringer als das verbleibende Ladungsausmaß der Batterie (113) ist, das benötigt ist, um sich in der ersten Betriebsart über den gesamten Abschnitt mit der gegenwärtigen Position fortzubewegen, die erste Betriebsart als eine Fahrbetriebsart eines Unterabschnitts bis zu einer zweiten Position näher zu der gegenwärtigen Position als die erste Position anzuzeigen.

2. Bewegungsunterstützungsvorrichtung nach Anspruch 1, wobei
die zweite Position gemäß dem gegenwärtigen verbleibenden Ladungsausmaß der Batterie (113) eingestellt ist.

3. Bewegungsunterstützungsvorrichtung nach Anspruch 2, wobei
die zweite Position derart eingestellt ist, um näher bei der gegenwärtigen Position zu sein, wenn sich das verbleibende Ladungsausmaß der Batterie (113) verringert.

4. Bewegungsunterstützungsvorrichtung nach Anspruch 1, wobei
der Abschnitt durch die Planeinheit (111a) derart geplant ist, dass sich das Fahrzeug in der zweiten Betriebsart fortbewegt.

5. Bewegungsunterstützungsverfahren, das eine Bewegung eines Fahrzeugs einschließlich einer Brennkraftmaschine und einem Motor als Antriebsquellen unterstützt, wobei das Bewegungsunterstützungsverfahren umfasst
ein Planen, durch eine Planeinheit (111a), irgendeiner aus einer ersten Betriebsart oder einer zweiten Betriebsart als eine Fahrbetriebsart für jeden Abschnitt, in den eine Fortbewegungsroute von einer gegenwärtigen Position zu einem Ziel unterteilt ist, wobei ein Ladungsausmaß einer Batterie (113) in der ersten Betriebsart nicht gehalten wird, und wobei das Ladungsausmaß der Batterie (113) in der zweiten Betriebsart gehalten wird,
ein Steuern, durch eine Steuereinheit (111b), der Fahrbetriebsart jedes Abschnitts der Fortbewegungsroute basierend auf der durch die Planeinheit (111a) für diesen Abschnitt geplanten Fahrbetriebsart,
ein Steuern, durch eine Steuereinheit (111b), wenn ein gegenwärtiges verbleibendes Ladungsausmaß der Batterie (113) geringer als ein verbleibendes Ladungsausmaß der Batterie (113) ist, das benötigt ist, um sich in der ersten Betriebsart über den gesamten Abschnitt mit der gegenwärtigen Position fortzubewegen, der Fahrbetriebsart des Abschnitts mit der gegenwärtigen Position zu der ersten Fahrbetriebsart, bis das verbleibende Ladungsausmaß der Batterie (113) Null wird, ungeachtet der durch die Planeinheit (111a) für den Abschnitt mit dem gegenwärtigen Abschnitt geplanten Fahrbetriebsart, und
ein Anzeigen, durch eine Anzeigeeinheit (111c), der für einen Abschnitt in der Fortbewegungsroute von der gegenwärtigen Position zu einer ersten Position eine vorbestimmte Distanz vor der gegenwärtigen Position geplanten Fahrbetriebsart, und
ein Anzeigen, durch eine Anzeigeeinheit (111c), wenn das gegenwärtige verbleibende Ladungsausmaß der Batterie (113) geringer als das verbleibende Ladungsausmaß der Batterie (113) ist, das benötigt ist, um sich in der ersten Betriebsart über den gesamten Abschnitt mit der gegenwärtigen Position fortzubewegen, der ersten Betriebsart als eine Fahrbetriebsart eines Unterabschnitts bis zu einer zweiten Position näher zu der gegenwärtigen Position als die erste Position.

6. Bewegungsunterstützungsverfahren nach Anspruch 5, wobei
die zweite Position gemäß dem gegenwärtigen verbleibenden Ladungsausmaß der Batterie (113) eingestellt wird.

7. Bewegungsunterstützungsverfahren nach Anspruch 6, wobei
die zweite Position derart eingestellt wird, um näher bei der gegenwärtigen Position zu sein, wenn sich das verbleibende Ladungsausmaß der Batterie (113) verringert.

8. Bewegungsunterstützungsverfahren nach Anspruch 5, wobei
der Abschnitt durch die Planeinheit (111a) derart geplant wird, dass sich das Fahrzeug in der zweiten Betriebsart fortbewegt.

9. Fahrunterstützungssystem, mit
der Bewegungsunterstützungsvorrichtung nach einem der Ansprüche 1 bis 4, wobei die Bewegungsunterstützungsvorrichtung dazu eingerichtet ist, um eine Fahrbetriebsart für jeden Abschnitt zu planen, in den eine Fortbewegungsroute von einer gegenwärtigen Position eines Fahrzeugs zu einem Ziel unterteilt ist, und um eine Fahrbetriebsart jedes Abschnitts gemäß der einen Fahrbetriebsart zu steuern, um ein Fahren des Fahrzeugs basierend auf der einen Fahrbetriebsart zu unterstützen, wobei das Fahrzeug eine Brennkraftmaschine und einen Motor als Antriebsquellen umfasst, wobei die eine Fahrbetriebsart aus einer Vielzahl von verschiedenen Fahrbetriebsarten ausgewählt ist.

## Revendications

1. Appareil d'assistance au mouvement qui assiste le mouvement d'un véhicule qui comprend un moteur à combustion interne et un moteur comme sources d'entraînement, l'appareil d'assistance au mouvement comprenant :
une unité de planification (111a) configurée pour planifier n'importe lequel d'un premier mode ou d'un second mode en tant que mode de conduite pour chaque section en laquelle un itinéraire de voyage entre une position actuelle et une destination est sectionné, une quantité de charge d'une batterie (113) n'étant pas conservée dans le premier mode, la quantité de charge de la batterie (113) étant conservée dans le second mode ;
une unité de commande (111b) configurée pour contrôler le mode de conduite de chaque section de l'itinéraire de voyage sur la base du mode de conduite planifié par l'unité de planification (111a) pour cette section, l'unité de commande (111b) étant configurée pour, lorsqu'une quantité restante actuelle de charge de la batterie (113) est inférieure à une quantité restante de charge de la batterie (113) nécessaire pour se déplacer dans le premier mode sur la section entière qui comprend la position actuelle, contrôler le mode de conduite de la section qui comprend la position actuelle selon le premier mode jusqu'à ce que la quantité restante de charge de la batterie (113) devienne égale à zéro, quel que soit le mode de conduite planifié par l'unité de planification (111a) pour la section qui comprend la position actuelle ; et
une unité d'affichage (111c) configurée pour indiquer le mode de conduite planifié pour une section de l'itinéraire de voyage entre la position actuelle et une première position à une distance prédéterminée en avant de la position actuelle, l'unité d'affichage (111c) étant configurée pour, lorsque la quantité restante actuelle de charge de la batterie (113) est inférieure à la quantité restante de charge de la batterie (113) nécessaire pour se déplacer dans le premier mode sur la section entière qui comprend la position actuelle, indiquer le premier mode comme étant un mode de conduite d'une sous-section jusqu'à une seconde position plus proche de la position actuelle que la première position.

2. Appareil d'assistance au mouvement selon la revendication 1, dans lequel
la seconde position est définie selon la quantité actuelle restante de charge de la batterie (113).

3. Appareil d'assistance au mouvement selon la revendication 2, dans lequel
la seconde position est définie de façon à être plus proche de la position actuelle au fur et à mesure que la quantité restante de charge de la batterie (113) diminue.

4. Appareil d'assistance au mouvement selon la revendication 1, dans lequel
la section est planifiée par l'unité de planification (111a) de sorte que le véhicule se déplace dans le second mode.

5. Procédé d'assistance au mouvement qui assiste le mouvement d'un véhicule qui comprend un moteur à combustion interne et un moteur en tant que sources d'entraînement, le procédé d'assistance au mouvement comprenant :
la planification, par une unité de planification (111a), d'un quelconque d'un premier mode ou d'un second mode en tant que mode de conduite pour chaque section en laquelle un itinéraire de voyage entre une position actuelle et une destination est sectionné, une quantité de charge d'une batterie (113) n'étant pas conservée dans le premier mode, la quantité de charge de la batterie (113) étant conservée dans le second mode ;
le contrôle, par une unité de commande (111b), du mode de conduite de chaque section de l'itinéraire sur la base du mode de conduite planifié par l'unité de planification (111a) pour cette section ;
lorsqu'une quantité de charge restante actuelle de la batterie (113) est inférieure à une quantité restante de charge de la batterie (113) nécessaire pour se déplacer dans le premier mode sur la section entière qui comprend la position actuelle, le contrôle, par l'unité de commande (111b), du mode de conduite de la section qui comprend la position actuelle selon le premier mode, jusqu'à ce que la quantité de charge restante de la batterie (113) soit égale à zéro, quel que soit le mode de conduite planifié par l'unité de planification (111a) pour la section qui comprend la position actuelle;
l'indication, par une unité d'affichage (111c), du mode de conduite planifié pour une section de l'itinéraire de voyage entre la position actuelle et une première position à une distance prédéfinie en avant de la position actuelle ; et
lorsque la quantité de charge restante actuelle de la batterie (113) est inférieure à la quantité de charge restante de la batterie (113) nécessaire pour se déplacer dans le premier mode sur la section entière qui comprend la position actuelle, l'indication, par l'unité d'affichage (111c), du premier mode en tant que mode de conduite d'une sous-section jusqu'à une seconde position plus proche de la position actuelle que la première position.

6. Procédé d'assistance au mouvement selon la revendication 5, dans lequel
la seconde position est définie selon la quantité restante actuelle de charge de la batterie (113).

7. Procédé d'assistance au mouvement selon la revendication 6, dans lequel
la seconde position est définie de façon à être plus proche de la position actuelle au fur et à mesure que la quantité restante de charge de la batterie (113) diminue.

8. Procédé d'assistance au mouvement selon la revendication 5, dans lequel
la section est planifiée par l'unité de planification (111a) de sorte que le véhicule se déplace dans le second mode.

9. Système d'assistance à la conduite qui comprend :
l'appareil d'assistance au mouvement selon l'une quelconque des revendications 1 à 4, l'appareil d'assistance au mouvement étant configuré pour planifier un mode de conduite pour chaque section en laquelle un itinéraire de voyage entre une position actuelle et une destination est sectionné, et pour contrôler un mode de conduite de chaque section selon le mode de conduite afin d'assister la conduite du véhicule sur la base du mode de conduite, le véhicule comprenant un moteur à combustion interne et un moteur en tant que sources d'entraînement, le mode de conduite étant choisi parmi une pluralité de modes de conduites différents.
